# EUROPÄISCHE PATENTSCHRIFT

(11) **EP 0 937 845 B1**
(45) Veröffentlichungstag und Bekanntmachung des Hinweises auf die Patenterteilung: **24.03.2004**
(21) Anmeldenummer: 99100358.3
(22) Anmeldetag: 14.01.1999
(51) Int. Cl.: E05B 49/00

(54) **Freigabesystem für die Freigabe von Funktionen einer Einrichtung**
Releasing system as means of releasing functions
Système de déblocage de fonction des moyens

(30) Priorität: 24.02.1998 DE 19807473
(43) Veröffentlichungstag der Anmeldung: 25.08.1999
(73) Patentinhaber: Delphi Automotive Systems Deutschland GmbH, D-42369 Wuppertal (DE)
(72) Erfinder: Langenbach, Julia, Dr., 57258 Freudenberg (DE)
(74) Vertreter: COHAUSZ & FLORACK

(56) Entgegenhaltungen:
- DE-C1- 4 428 947
- US-A- 5 369 706
- US-A- 5 646 996

## Beschreibung

Die Erfindung betrifft ein Freigabesystem zur Überprüfung, ob eine Anforderung der Freigabe von Funktionen einer Einrichtung berechtigt ist, wobei die Funktionen beispielsweise in der Entschärfung einer Alarmanlage oder einer Wegfahrsperre und in der Aktivierung einer Zentralverriegelung eines Fahrzeugs bestehen können, mit einem einrichtungsseitig angeordneten ersten Generator zum Erzeugen eines ersten, sich schrittweise ändernden Codes ausgehend von einem aktuellen Innenzustand des ersten Generators, sowie mit einer Fernbedienung, die einen zweiten Generator umfaßt zum Erzeugen eines zweiten, sich schrittweise ändernden Codes ausgehend von einem aktuellen Innenzustand des zweiten Generators, Mittel zum Übertragen des generierten zweiten Codes über eine Funkstrecke an die Einrichtung und einen Transponder, der geeignet ist, die Fernbedienung gegenüber der Einrichtung zu authentifizieren, wobei der Generator der Fernbedienung und der Generator der Einrichtung geeignet sind zur synchronen Generierung eines Codes und wobei dem einrichtungsseitigen ersten Generator Vergleichsmittel zugeordnet sind zum Vergleichen des einrichtungsseitig generierten und des in der Fernbedienung generierten und zu der Einrichtung übertragenen Codes für eine Überprüfung der Berechtigung der Fernbedienung zur Anforderung der Freigabe der Funktionen. Die Erfindung betrifft ebenso ein Verfahren bezüglich eines solchen Freigabesystems.

Aus der Praxis ist der Einsatz von Fernbedienungen bekannt, die einer geeignet ausgebildeten Einrichtung eines Fahrzeugs über eine Funkstrecke Berechtigungsinformationen für die kontrollierte Freigabe von Fahrzeugfunktionen liefern. Die so überwachten Fahrzeugfunktionen können die Entschärfung der Alarmanlage, die Freigabe der Wegfahrsperre und/oder die Aktivierung der Zentralverriegelung umfassen. Die eingesetzten Berechtigungsinformationen bestehen aus einem Wert, der geeignet ist, die Fernbedienung dem Fahrzeug gegenüber zu identifizieren und als zur Anforderung einer Freigabe der Fahrzeugfunktionen . berechtigt auszuweisen.

Die zu diesem Zweck ursprünglich eingesetzten Festcode-Verfahren, nach denen die Information, die von einer Fernbedienung übertragen wird, zwar gerätespezifisch aber für eine Fernbedienung festgelegt ist, sind sehr unsicher, da bei jeder Kommunikation die gleiche Information gesendet wird. Dadurch kann die Information von einem Unbefugten abgehört, aufgenommen und zu einer Freigabe der Fahrzeugfunktionen verwendet werden.

Aus diesem Grund werden heute zunehmend sogenannte "Rolling Code"-Verfahren eingesetzt. Diese Rolling Code-Verfahren zeichnen sich im Gegensatz zu den Festcode-Verfahren dadurch aus, daß bei jeder Übertragung einer Berechtigungsinformation ein anderer Wert als Rolling Code gesendet wird, der nur einmal verwendbar ist.

Als zu übertragender Wert wird in der Regel eine binäre Zahl verwendet, die sich jedesmal ändert und die jedesmal wie zufällig aussieht. Wirklich zufällig kann die Zahl allerdings nicht sein, da das Fahrzeug zur Überprüfung wissen muß, welcher Wert von der berechtigten Fernbedienung zu erwarten ist. Zu Gewährleistung einer hohen Sicherheit bestehen deshalb die Hauptanforderungen bei solchen Verfahren darin, daß die Zahl lang genug sein muß, daß sie sich nie wiederholen darf und daß sie auch nicht vorhersagbar sein darf.

Es existieren unterschiedliche kryptographische Verfahren für die Erzeugung von Rolling Codes. Zum einen kann ein Zähler eingesetzt werden, dessen jeweils aktueller Stand verschlüsselt wird, oder aber es wird ausgehend von dem letzten Rolling Code mittels eines Algorithmus eine "Zufallszahl" erzeugt.

Sowohl in der Fernbedienung als auch in dem Fahrzeug ist jeweils ein Generator zur Erzeugung der Rolling Codes integriert. Damit das Fahrzeug in der Lage ist, einen von der Fernbedienung erhaltenen Rolling Code zu verifizieren, müssen die Generatoren identisch sein und sich im gleichen Zustand befinden, also synchron laufen. Die Sicherheit des Systems basiert in der Regel auf einer Geheimzahl, dem Secret Key, die nur dem Fahrzeug und der Fernbedienung bekannt ist. Der interne Zustand der Generatoren ist für einen externen Beobachter ebenfalls unbekannt. Die Geheimhaltung dieses Zustandes ist einer der sicherheitsrelevanten Aspekte des Systems.

Hieraus können sich in der praktischen Anwendungen Probleme ergeben. So weist die Fernbedienung eine Batterie auf, die irgendwann leer ist. Das System darf in diesem Fall kein Reset durchführen und in den Ursprungszustand zurückkehren, denn das würde bedeuten, daß die Zahlen, die schon einmal übertragen worden sind, sich wiederholen würden und das Fahrzeug sie akzeptieren müßte. Das heißt, daß ein Memory vorhanden sein muß, in dem der aktuelle Zustand nach jeder Übertragung gespeichert wird. Normalerweise wird als Memory ein EEPROM eingesetzt. Das führt aber zu einer Reduzierung der Lebensdauer der Fernbedienung, da ein EEPROM nur begrenzt beschreibbar ist, meistens bis zu 10 000 mal.

Das Schreiben muß ferner da erfolgen, wo das Fahrzeug sich gerade befindet. Das bedeutet eventuelle Störungen und als Ergebnis falsche Werte im EEPROM. In schlimmsten Fall kann der ganze Inhalt des EEPROM verloren gehen, und die Fernbedienung muß neu programmiert oder ersetzt werden.

Außerdem kann die Synchronisierung verloren gehen, wenn der Benutzer in Abwesenheit des Fahrzeugs auf den Senderknopf drückt.

Es gibt zur Zeit unterschiedliche Verfahren, die Synchronisierung wiederherzustellen. Eine Möglichkeit besteht darin, die Neusynchronisierung in einer Werkstatt durchführen zu lassen. Dies ist jedoch für den Nutzer des Fahrzeugs unpraktisch und teuer. Es sind zudem Möglichkeiten bekannt, um im Auto neu zu synchronisieren. Diese sind zwar praktischer und billiger für den Nutzer, führen aber zu hohen Sicherheitseinbußen. Die hierzu eingesetzten Verfahren basieren darauf, daß mindestens zwei aufeinanderfolgende Rolling Codes hintereinander über die Funkstrecke von der Fernbedienung an das Fahrzeug übertragen werden. Erweist sich nun im Fahrzeug, daß der zweite Rolling Code aus dem ersten mittels des eingesetzten kryptographischen Verfahrens zur Erzeugung der Rolling Codes generiert werden konnte, so wird er als neuer Innenzustand für den Code Generator des Fahrzeugs akzeptiert. Da der erste Rolling Code mehr oder weniger beliebig sein kann, wird auch eine beliebige Anzahl an möglichen Kombinationen von Rolling Codes akzeptiert.

Aufgrund dieser großen Anzahl möglicher Codepaare ist es aber bei Kenntnis eines Teils des kryptographischen Algorithmus meistens wesentlich einfacher, ein gültiges Rolling Code Paar zu finden, als eine einzige richtige Zahl, so daß das Risiko eines unberechtigten Neusetzens des Innenzustandes des Codegenerators im Fahrzeug gegeben ist.

Eine Fernbedienung für die Freigabe von Fahrzeugfunktionen unter Einsatz des Rolling Code Verfahrens wird in der Druckschrift DE 44 28 947 C1 beschrieben. Basierend auf dem aktuellen Zustand eines Codetaktimpulsgenerators in der Fernbedienung wird ein Rolling Code generiert und an das Fahrzeug gesendet. Dieses enthält ebenfalls einen Codetaktimpulsgenerator, dessen Zustand mit dem Zustand des Codetaktimpulsgenerator in der Fernbedienung synchronisiert ist. Dadurch kann im Fahrzeug bestimmt werden, welcher Wert von der berechtigten Fernbedienung zu erwarten ist, und nur bei Übereinstimmung des empfangenen Rolling Codes mit einem intern erzeugten Rolling Code erfolgt eine Freigabe der Fahrzeugfunktionen. In der Fernbedienung ist zusätzlich ein Transponder vorgesehen, mit dem eine Möglichkeit geschaffen wird, auch nach einem Ausfall des Energiespeichers im Sender über die Fernbedienung einen Zugang zu den geschützten Fahrzeugfunktionen zur Verfügung zu stellen. Zu diesem Zweck wird ein im Transponder gespeicherter Code auf Anfrage des Fahrzeugs hin zu diesem übertragen und dort anhand eines gespeicherten Wertes überprüft. Bei erfolgreicher Authentifizierung werden die Fahrzeugfunktionen freigegeben. Anschließend wird für die nächste Anfrage ein neuer Code einerseits im Fahrzeug gespeichert und andererseits an den Transponder übertragen und in dem Transponderspeicher abgelegt.

In der DE 44 28 947 C1 sind jedoch keine Maßnahmen vorgesehen für den Fall, daß die Synchronisierung zwischen dem Codeimpulsgenerator der Fernbedienung und dem Codeimpulsgenerator des Fahrzeugs aufgrund des Ausfalls des Energiespeichers der Fernbedienung oder aufgrund eines sonstigen Fehlers verloren gegangen ist.

In der Druckschrift US 5,369,706 wird ein schlüsselloses Zugangssystem beschrieben, in dem ein Code Generator in einem Empfänger eines Fahrzeugs mit einem Code Generator in einem als Schlüsselanhänger ausgebildeten Sender neu synchronisiert werden kann. Auf Anforderung eines Nutzers generiert der Sender Zufallswerte und sendet sie an den Empfänger. Die Zufallswerte werden in Sender und Empfänger als neue Variablen für den jeweiligen CodeGenerator genutzt.

Der Erfindung liegt die Aufgabe zugrunde, ein Freigabesystem zur Überprüfung der Berechtigung einer Anforderung der Freigabe von Fahrzeugfunktionen gemäß dem Oberbegriff sowie ein Verfahren für eine solche Überprüfung zur Verfügung zu stellen, die eine sichere und wenig aufwendige Neusynchronisierung der Rolling Code Generatoren in Fahrzeug und Fernbedienung ermöglichen.

Die Erfindung wird zum einen bei einem Freigabesystem gemäß dem Oberbegriff des Anspruchs 1 dadurch gelöst, daß einrichtungsseitig Mittel zum Bereitstellen eines Synchronisierungssignals sowie Ausgabemittel zum Übertragen des Synchronisierungssignals an den Transponder der Fernbedienung vorgesehen sind, wobei die Innenzustände der Code Generatoren mittels des Synchronisierungssignals miteinander synchronisierbar sind.

Zum anderen wird die Erfindung gelöst durch ein Verfahren für ein Freigabesystem zur Überprüfung, ob eine Anforderung der Freigabe von Funktionen einer Einrichtung berechtigt ist, wobei die Funktionen beispielsweise in der Entschärfung einer Alarmanlage oder einer Wegfahrsperre und in der Aktivierung einer Zentralverriegelung eines Fahrzeugs bestehen können, mit einem einrichtungsseitig angeordneten ersten Generator zum Erzeugen eines ersten, sich schrittweise ändernden Codes ausgehend von einem aktuellen Innenzustand des ersten Generators, sowie mit einer Fernbedienung, die einen zweiten Generator umfaßt zum Erzeugen eines zweiten, sich schrittweise ändernden Codes ausgehend von einem aktuellen Innenzustand des zweiten Generators, Mittel zum Übertragen des generierten zweiten Codes über eine Funkstrecke an die Einrichtung und einen Transponder, der geeignet ist, die Fernbedienung gegenüber der Einrichtung zu authentifizieren, wobei der Generator der Fernbedienung und der Generator der Einrichtung geeignet sind zur synchronen Generierung eines Codes und wobei dem einrichtungsseitigen ersten Generator Vergleichsmittel zugeordnet sind zum Vergleichen des einrichtungsseitig generierten und des in der Fernbedienung generierten und zu der Einrichtung übertragenen Codes für eine Überprüfung der Berechtigung der Fernbedienung zur Anforderung der Freigabe der Funktionen, und wobei das Verfahren die folgenden Schritte umfaßt:
- Senden eines Synchronisierungsbefehls, insbesondere eines Headers, von der Einrichtung an den Transponder der Fernbedienung zum Signalisieren, daß neu synchronisiert werden soll,
- Senden einer Zufallszahl von der Einrichtung an den Transponder der Fernbedienung und
- Speichern eines auf der Zufallszahl basierenden Wertes als aktuellen Innenzustand der beiden Generatoren in Einrichtung und Fernbedienung.

Durch das erfindungsgemäße Freigabesystem und das erfindungsgemäße Verfahren wird ein Nachsynchronisieren ohne zusätzlichen Aufwand bei gleichzeitiger Wahrung einer hohen Sicherheit ermöglicht, indem der ohnehin in der Fernbedienung vorhandene Transponder zusätzlich als Empfänger für ein Synchronisierungssignal genutzt wird. Die Nachsynchronisierung erfolgt automatisch, so daß keine spezielle und aufwendige Nachsynchronisierung bei verlorengegangener Synchronisierung erforderlich ist. Die neue Synchronisierung soll jedoch erst dann erfolgen, wenn sich die Fernbedienung über den Transponder authentifiziert hat oder sich durch den Vergleich der generierten Rolling Codes als berechtigt erwiesen hat. Während des gesamten Ablaufs bleibt der innere Zustand der Code Generatoren für einen externen Beobachter völlig unbekannt.

Hinzu kommt, daß das Schreiben in ein EEPROM nicht mehr notwendig ist. Unter normalen Umständen sind die aktuellen Zustandswerte in einem Memory gespeichert.

Die von der Einrichtung generierte und an den Transponder der Fernbedienung übersandte Zufallszahl wird vorzugsweise zunächst sowohl in der Einrichtung als auch in der Fernbedienung mit der gleichen Verschlüsselungsfunktion verschlüsselt, bevor sie zum Setzen der aktuellen Innenzustände der Code Generatoren in Einrichtung und Fernbedienung verwendet wird, da so eine besonders große Sicherheit erzielt werden kann.

Vorteilhafterweise sendet die Fernbedienung nicht nur einen jeweils geänderten Code an die Einrichtung, sondern zusätzlich einen Festcode, der sich aus Werten wie ID-Nummer, Header und Knopffunktion zusammensetzt.

Besonders günstig kann die Synchronisierung ausgeführt werden, wenn die Synchronisierungssignale, die die Einrichtung an den Transponder der Fernbedienung sendet, sich zusammensetzen aus einem Synchronisierungsbefehl, der der Fernbedienung bekannt gibt, daß neu synchronisiert werden soll, und einer Zufallszahl, die verwendet wird um den neuen Innenzustand des Code Generators der Fernbedienung zu setzen.

Nach einer bevorzugte Möglichkeit der Authentifizierung des Transponder sendet zunächst die Einrichtung eine Zufallszahl und eine mit der Funktion f verschlüsselte Zufallszahl an den in der Fernbedienung integrierten Transponder. Der Transponder empfängt die Zufallszahl, verschlüsselt sie und vergleicht sie mit der empfangenen verschlüsselten Zufallszahl. Falls sich eine Übereinstimmung ergibt, so wird die Zahl weiter verschlüsselt, diesmal mit der Funktion g, und zurück an die Einrichtung übertragen. Die Einrichtung prüft das Ergebnis und erkennt den Transponder als gültig an oder lehnt ihn ab. Auf diese Weise wird zunächst die Einrichtung gegenüber der Fernbedienung authentifiziert und anschließend die Fernbedienung gegenüber der Einrichtung, so daß eine besonders hohe Sicherheit vor Manipulationen gegeben ist.

Die gleichen geheimen Funktionen f und g können auch von Fernbedienung und Einrichtung verwendet werden, um die mit einem Synchronisierungssignal übermittelte Zufallszahl zu verschlüsseln, bevor sie für das Setzen des neuen, synchronisierten Innenzustands der Code Generatoren in Fernbedienung und Einrichtung verwendet werden.

Das erfindungsgemäße Freigabesystem und das erfindungsgemäße Verfahren für ein Freigabesystem können vorteilhaft für die Synchronisierung beliebiger, in Einrichtung und Fernbedienung verwendeter Code Generatoren, die sich ändernde, aber aufeinander abgestimmte Codes erzeugen sollen, eingesetzt werden. Vorzugsweise ist das Freigabesystem jedoch mit Rolling Code Generatoren versehen, die jedesmal einen anderen, sich nie wiederholenden Rolling Code zur Verfügung stellen. Durch den Einsatz solcher Rolling Code Generatoren wird eine besonders hohe Sicherheit erzielt. Aber auch bei Rolling Code Systemen verbleibt eine gewisse "Vorhersagbarkeit" des Innenzustandes. Abhängig von der benutzten Kryptographie ist es schwieriger oder leichter, den nächsten Zustand zu erraten. Allen Systemen ist aber gemein, daß der neue Zustand aus dem vorherigen Zustand berechnet wird, so daß die Zahlen nicht wirklich zufällig sind.

Das erfindungsgemäße Freigabesystem kann nach einer weiteren bevorzugten Ausführungsform dazu eingesetzt werden, diese Schwachstelle der Rolling Code Systeme zu umgehen und eine erhöhte Sicherheit zu gewährleisten. Dies wird erreicht, indem eine neue Synchronisierung nach jeder erfolgreichen Berechtigungsprüfung über den Vergleich der Rolling Codes vorgesehen wird:

Der Rolling Code Generator der Fernbedienung hat einen bestimmten Innenzustand. Daraus wird ein Rolling Code generiert und dieser zu der Einrichtung gesendet. Falls der Code gültig ist, werden die gesicherten Funktionen freigegeben. Befindet sich nun der Transponder der Fernbedienung im Feld der Einrichtung, so wird wie weiter oben beschrieben "nachsynchronisiert", obwohl die vorherige Funkübertragung gültig war. Der Generator erhält somit einen neuen Innenzustand und kann einen neuen Rolling Code erzeugen. Die Innenzustände sind also nicht mehr sich aus dem jeweils letzten Innenzustand ergebende Zahlen; vielmehr "springen" sie nun "echt" zufällig im ganzen Zahlenraum.

Rolling Code Systeme arbeiten normalerweise mit einem sogenannten "Empfangsfenster". Das bedeutet, daß der Senderknopf der Fernbedienung auch in Abwesenheit der Einrichtung betätigt werden kann, ohne daß die Synchronisierung verloren geht. Die Anzahl der Knopfdrücke darf hierzu lediglich eine vorgegebene Zahl nicht überschreiten. Diese vorgegebene Zahl heißt "Fenstergröße". Das erfindungsgemäße Freigabesystem wird gemäß einer bevorzugten Ausführungsform mit einem solchen Fenster kombiniert. Dadurch ist ein Nachsynchronisieren nur dann erforderlich, wenn die Fenstergröße überschritten wird.

Bei einer Kombination der Verwendung eines "Empfangsfensters" mit einer jedesmal erfolgenden "Nachsynchronisierung" wird der Zustand der Rolling Code Generatoren erst nach einer gültigen Übertragung "nachsynchronisiert". Das heißt, daß erst innerhalb des Fensters gesucht wird, ob der Rolling Code stimmt, und nur dann wird der Innenzustand durch die "Nachsynchronisierung" springen.

Weitere vorteilhaft Ausgestaltungen des erfindungsgemäßen Freigabesystems und des erfindungsgemäßen Verfahrens gehen aus den Unteransprüchen hervor.

Die Erfindung wird im folgenden anhand eines Ausführungsbeispiels unter Bezugnahme auf Zeichnungen näher erläutert. Dabei zeigt
- Fig. 1: ein Blockschaltbild eines Ausführungsbeispiels des erfindungsgemäßen Freigabesystems, eingesetzt zur Überwachung der Freigabe bestimmter Funktionen eines Fahrzeugs,
- Fig. 2: ein Ablaufdiagramm, das die Signalübertragung zwischen der Fernbedienung und dem Fahrzeug verdeutlicht, und
- Fig. 3: ein Ablaufdiagramm, in dem die Synchronisierung der Rolling Code Generatoren verdeutlicht wird.

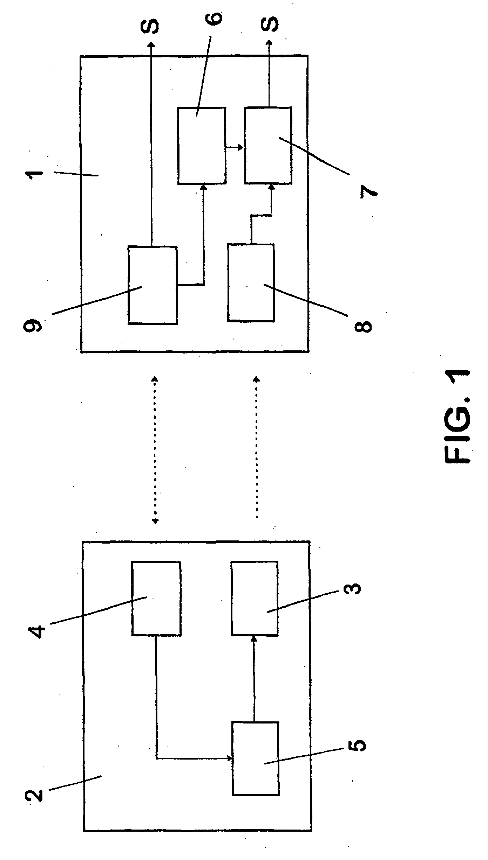

In Figur 1 sind die wesentlichen Elemente eines erfindungsgemäßen Freigabesystems dargestellt, mit dem die Startfunktion eines Fahrzeuges kontrolliert freigegeben werden kann.

Das Freigabesystem umfaßt zur Ermöglichung einer solchen kontrollierten Freigabe eine Einrichtung in einem Fahrzeug 1 und eine Fernbedienung 2, die geeignet sind, miteinander zu kommunizieren.

Die Fernbedienung 2 weist hierzu zum einen Mittel 3 zum Übertragen von Informationen über Funkstrecke auf und zum anderen einen Transponder 4, der geeignet ist, ohne Bedarf an Energie aus der Fernbedienung 2 Signale von dem Fahrzeug zu empfangen und Signale an das Fahrzeug zu senden. Für die reguläre Authentifizierung der Fernbedienung 2 gegenüber dem Fahrzeug verfügt die Fernbedienung 2 über einen gespeicherten Festcode und weist einen Generator 5 auf, der einen jedesmal unterschiedlichen Rolling Code in Abhängigkeit von einem aktuellen Innenzustand erzeugt. Der Transponder 4 umfaßt ferner Mittel, die eine Verschlüsselung von Zahlen mit verschiedenen Funktionen f und g ermöglichen, sowie Vergleichsmittel zum Vergleichen empfangener Zahlen mit in der Fernbedienung 2 selbst verschlüsselten Zahlen.

Die Einrichtung des Fahrzeugs 1 weist Mittel 8 zum Empfangen von Funksignalen und mit Mitteln zum Bereitstellen von Synchronisierungssignalen versehene Sende/Empfangsmitteln 9 zum Übertragen von Aktivierungsenergie und von Signalen an den Transponder 4 der Fernbedienung sowie zum Empfangen von vom Transponder 4 ausgesandten Signalen auf. Ebenso wie die Fernbedienung 2 hat die Einrichtung des Fahrzeugs 1 Zugriff auf einen gespeicherten Festcode, und sie umfaßt auch einen Generator 6 zum Erzeugen eines Rolling Codes in Abhängigkeit eines aktuellen Innenzustands und Vergleichsmittel 7 zum Vergleichen intern generierter Werte mit empfangenen Werten.

Mit den in Fernbedienung 2 und Fahrzeug bereitgestellten Elementen sind zwei separate Kommunikationsstrecken vorhanden. Die Funkstrecke, die zwischen den Übertragungsmitteln 3 der Fernbedienung 2 und dem Empfangsmitteln 8 des Fahrzeugs gegeben ist, ist unidirektional ausgebildet, nämlich von der Fernbedienung 2 zum Fahrzeug. Die Niedrigfrequenzstrecke zwischen dem Transponder 4 der Fernbedienung 2 und den Sende/Empfangsmitteln 9 des Fahrzeugs dagegen ist bidirektional, da der in der Fernbedienung 2 integrierte Transponder 4 Signale nicht nur senden sondern auch empfangen kann.

Über die Funkstrecke erfolgt die reguläre Freigabe der Fahrzeugfunktionen über ein Freigabesignal S nach einem Vergleich der von den Rolling Code Generatoren 5,6 von Fernbedienung 2 und Fahrzeug generierten Rolling Codes. Über die Niedrigfrequenzstrecke wird eine Authentifizierung der Fernbedienung 2 über den Transponder 4 für eine ersatzweise Freigabe der Fahrzeugfunktionen sowie eine neue Synchronisierung der Rolling Code Generatoren 5,6 ermöglicht.

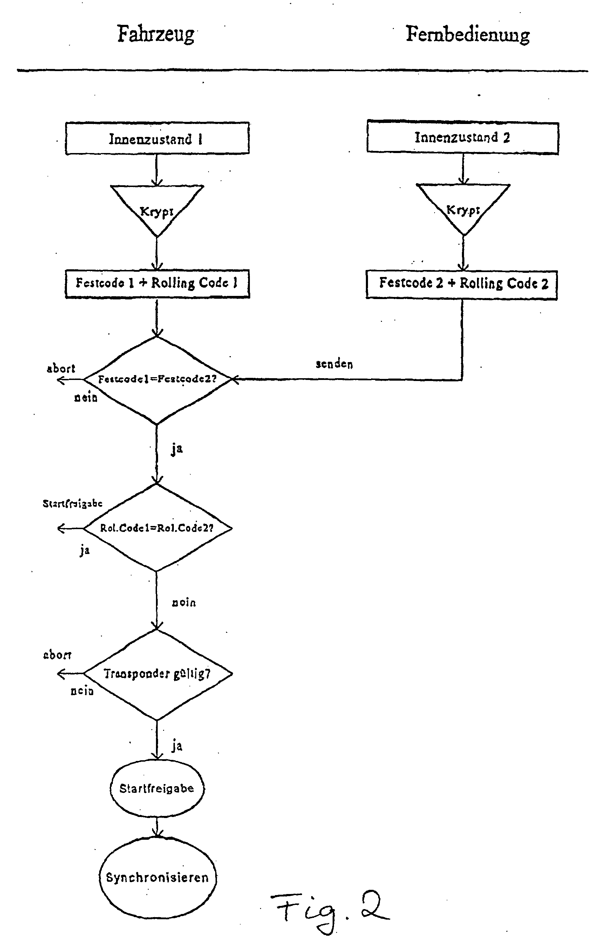

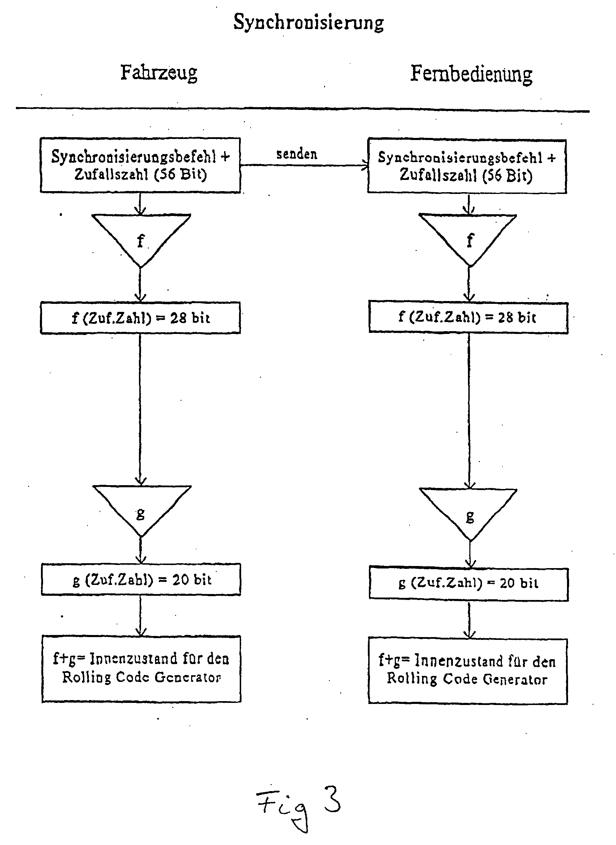

In den Figuren 2 und 3 ist der Datenaustausch zwischen der Einrichtung des Fahrzeugs 1 und der Fernbedienung 2 sowie die Verarbeitung der Daten innerhalb des Fahrzeugs bzw. innerhalb der Fernbedienung 2 bei dem Einsatz eines erfindungsgemäßen Freigabesystems dargestellt.

Bezüglich einer Kommunikation zwischen Fernbedienung 2 und Fahrzeug sind mehrere Situationen, die sich ergeben können, zu berücksichtigen.

Zunächst einmal sei die in den Figuren 2 und 3 nicht einbezogene Situation gegeben, daß das Fahrzeug erkennt, daß sich ein gültiger Transponder 4 im Feld der Einrichtung des Fahrzeugs befindet, ohne daß ein Versuch erfolgt, mit der Fernbedienung 2 eine Kommunikation über die Funkstrecke aufzubauen. Der Start wird daraufhin im Rahmen einer "Notfunktion" freigegeben, da seitens des Fahrzeugs in diesem Fall angenommen wird, daß eine Kommunikation über Funkstrecke deshalb nicht erfolgte, weil die Batterie der Fernbedienung 2 leer ist.

Für die Überprüfung der Gültigkeit des Transponders 4 senden die Sende/Empfangsmittel 9 des Fahrzeugs eine Zufallszahl und eine mit der Funktion f verschlüsselte Zufallszahl an den in der Fernbedienung 2 integrierten Transponder 4. Der Transponder 4, der mit von dem Fahrzeug erhaltener Energie aktiviert wurde, empfängt die Zufallszahl, verschlüsselt sie und vergleicht sie mit der empfangenen verschlüsselten Zufallszahl. Falls sich eine Übereinstimmung ergibt, so wird die Zahl weiter verschlüsselt, diesmal mit der Funktion g, und zurück an das Fahrzeug übertragen. Das Fahrzeug prüft das Ergebnis und erkennt den Transponder 4 als gültig an oder lehnt ihn ab. Eine spezielle weitere Reaktion des Fahrzeugs außer der Freigabe der kontrollierten Fahrzeugfunktionen ist hier nicht notwendig.

Die Funktionsweise des Freigabesystems in allen weiteren Situationen, bei denen zumindest irgendeine Information von einer Fernbedienung 2 über Funkstrecke an die Mittel 8 des Fahrzeugs zum Empfangen von Funksignalen übermittelt wird, wird im folgenden anhand der Figuren 2 und 3 erläutert.

Unter Einbezug ihres jeweiligen Innenzustands 1 bzw. 2 generieren die Code Generatoren 5 bzw. 6 von Fahrzeug und Fernbedienung 2 einen Rolling Code 1 bzw. 2 und die gespeicherten Festcodes 1 bzw. 2 werden ausgelesen. Die Fernbedienung 2 sendet nun seine Codeinformation an das Fahrzeug, in dem durch die Vergleichsmittel 7 überprüft wird, ob der von der Fernbedienung 2 empfangene Festcode 2 übereinstimmt mit dem Festcode 1 des Fahrzeug. Der Festcode umfaßt dabei ID-Nummer, Header und Knopffunktion.

Bei mangelnder Übereinstimmung der beiden Festcodes 1 und 2 wird die Anfrage ignoriert und das Verfahren abgebrochen. Ist ein gültiger Transponder 4 vorhanden, so wird über die bereits erwähnte "Notfunktion" der Start dennoch freigegeben.

Wird dagegen festgestellt, daß eine Übereinstimmung der Ferstcodes 1 und 2 vorliegt, so werden auch die Rolling Codes 1 und 2 von den Vergleichsmitteln 7 der Fahrzeugeinrichtung 1 miteinander verglichen.

Ergibt sich wiederum eine Übereinstimmung, so wird der Start direkt freigegeben. Hier handelt es sich um die "Normalfunktion". Eine spezielle weitere Reaktion seitens des Fahrzeugs ist nicht erforderlich.

Stimmt der von der Fernbedienung 2 übermittelte Rolling Code 2 jedoch nicht mit dem aktuellen Rolling Code 1 des Fahrzeugs überein, so kommen hierfür zwei mögliche Ursachen in Frage. Zum einen kann ein Unbefugter versuchen, das Freigabesystem zu überlisten. Zum anderen kann die Fernbedienung 2 zwar gültig, die Synchronisierung aber verloren gegangen sein, weil die Batterie ausgewechselt oder der Betätigungsknopf zu oft gedrückt wurde.

Um feststellen zu können, welche der Ursachen in Frage kommt, wird in dem Fall, daß sich ein Transponder 4 im Niederfrequenz-Sendefeld des Fahrzeugs, welches von den Sende/Empfangsmittel 9 erzeugt wird, befindet, eine Kommunikation aufgebaut, um festzustellen, ob der Transponder 4 gültig ist. Falls der Transponder 4 nicht gültig ist, so wird angenommen, daß die verwendete Fernbedienung 2 nicht zur Anforderung der Startfreigabe berechtigt ist, und der Vorgang wird abgebrochen. Ist der Transponder 4 jedoch gültig, so wird angenommen, daß es sich um eine berechtigte und lediglich nicht mehr synchronisierte Fernbedienung 2 handelt, und zunächst die Alarmanlage entschärft und der Start freigegeben.

Anschließen wird entsprechend Figur 3 eine neue Synchronisierung zwischen Fahrzeug und Fernbedienung 2 durchgeführt.

Die Sende/Empfangsmittel 9 des Fahrzeugs senden zu diesem Zweck einen Header als Synchronisierungsbefehl an den Transponder 4 der Fernbedienung 2. Danach wird eine Zufallszahl von den Sende/Empfangsmittel 9 des Fahrzeugs an den Transponder 4 der Fernbedienung 2 gesandt. Sowohl Fahrzeug als auch Fernbedienung 2 verschlüsseln mit den jeweiligen Verschlüsselungsmitteln die Zufallszahl mit der Funktion f und mit der Funktion g. Eine Kombination aus den Ergebnissen der Berechnungen werden sowohl im Fahrzeug wie auch in der Fernbedienung 2 dazu verwendet, um den aktuellen Zustand des jeweiligen Rolling Code Generators 5,6 neu zu setzen. Dadurch laufen die beiden Maschinen wieder synchron und bei der nächsten Kommunikation kann die Startfreigabe wieder als "Normalfunktion" erfolgen.

## Patentansprüche

1. Freigabesystem zur Überprüfung, ob eine Anforderung der Freigabe von Funktionen einer Einrichtung berechtigt ist, wobei die Funktionen beispielsweise in der Entschärfung einer Alarmanlage oder einer Wegfahrsperre und in der Aktivierung einer Zentralverriegelung eines Fahrzeugs bestehen können, mit einem einrichtungsseitig angeordneten ersten Generator (6) zum Erzeugen eines ersten, sich schrittweise ändernden Codes ausgehend von einem aktuellen Innenzustand des ersten Generators (6), sowie mit einer Fernbedienung (2), die einen zweiten Generator (5) umfaßt zum Erzeugen eines zweiten, sich schrittweise ändernden Codes ausgehend von einem aktuellen Innenzustand des zweiten Generators (5), Mittel (3) zum Übertragen des generierten zweiten Codes über eine Funkstrecke an die Einrichtung sowie einen Transponder (4), der geeignet ist, die Fernbedienung (2) gegenüber der Einrichtung zu authentifizieren, wobei der Generator (5) der Fernbedienung (2) und der Generator (6) der Einrichtung geeignet sind zur synchronen Generierung eines Codes und wobei dem einrichtungsseitigen ersten Generator (6) Vergleichsmittel (7) zugeordnet sind zum Vergleichen des einrichtungsseitig generierten und des in der Fernbedienung (2) generierten und zu der Einrichtung übertragenen Codes für eine Überprüfung der Berechtigung der Fernbedienung (2) zur Anforderung der Freigabe der Funktionen,
**dadurch gekennzeichnet,**
**daß** einrichtungsseitig Mittel (9) zum Bereitstellen eines Synchronisierungssignals sowie Ausgabemittel (9) zum Übertragen des Synchronisierungssignals an den Transponder (4) der Fernbedienung (2) vorgesehen sind, wobei die Innenzustände der Code Generatoren (5,6) mittels des Synchronisierungssignals miteinander synchronisierbar sind.

2. Freigabesystem nach Anspruch 1,
**dadurch gekennzeichnet,**
- **daß** einrichtungsseitig Verschlüsselungsmittel angeordnet sind zum Generieren eines Wertes für den Innenzustand des Code Generators (6) der Einrichtung aus mindestens einem Teil des bereitgestellten Synchronisierungssignals sowie Steuermittel zum Setzten des Innenzustandes entsprechend des generierten Wertes und
- **daß** die Fernbedienung (2) weitere Verschlüsselungsmittel aufweist zum Generieren eines Wertes für den Innenzustand des Code Generators (5) der Fernbedienung (2) basierend auf mindestens einem Teil des von dem Transponder (4) empfangbaren Synchronisierungssignals, und Steuermittel zum Setzten des Innenzustandes entsprechend des von den weiteren Verschlüsselungsmitteln generierten Wertes.

3. Freigabesystem nach einem der voranstehenden Ansprüche,
**dadurch gekennzeichnet,**
**daß** die von der Einrichtung bereitgestellten Synchronisierungssignale sich zusammensetzen aus einem Synchronisierungsbefehl zum Auffordern der Fernbedienung (2), neu zu synchronisieren, und aus einer Zufallszahl als zugrundezulegendem Wert für das Setzen des Innenzustands des Code Generators (5,6) der Einrichtung sowie der Fernbedienung (2).

4. Freigabesystem nach einem der voranstehenden Ansprüche,
**dadurch gekennzeichnet,**
**daß** die Einrichtung und die Fernbedienung (2) jeweils Mittel aufweisen zum Speichern eines Festcodes, der bei jeder Freigabeanforderung zusammen mit dem aktuellen sich schrittweise ändernden Code von der Fernbedienung an die Einrichtung übertragen wird, und daß die Einrichtung Vergleichsmittel (7) aufweist zum Überprüfen der Identität eines über Funkstrecke empfangenen Festcodes mit dem für diese Fernbedienung (2) gespeicherten Festcode.

5. Freigabesystem nach einem der voranstehenden Ansprüche,
**dadurch gekennzeichnet,**
**daß** die Code Generatoren (5,6) von der Fernbedienung (2) und von der Einrichtung Generatoren zum Generieren eines Rolling Codes basierend auf einem in der Fernbedienung (2) und in der Einrichtung gespeicherten, identischen "secret key" sind.

6. Verfahren für ein Freigabesystem zur Überprüfung, ob eine Anforderung der Freigabe von Funktionen einer Einrichtung berechtigt ist, wobei die Funktionen beispielsweise in der Entschärfung einer Alarmanlage oder einer Wegfahrsperre und in der Aktivierung einer Zentralverriegelung eines Fahrzeugs bestehen können, mit einem einrichtungsseitig angeordneten ersten Generator (6) zum Erzeugen eines ersten, sich schrittweise ändernden Codes ausgehend von einem aktuellen Innenzustand des ersten Generators (6), sowie mit einer Fernbedienung (2), die einen zweiten Generator (5) umfaßt zum Erzeugen eines zweiten, sich schrittweise ändernden Codes ausgehend von einem aktuellen Innenzustand des zweiten Generators (5), Mittel (3) zum Übertragen des generierten zweiten Codes über eine Funkstrecke an die Einrichtung sowie einen Transponder (4), der geeignet ist, die Fernbedienung (2) gegenüber der Einrichtung zu authentifizieren, wobei der Generator (5) der Fernbedienung (2) und der Generator (6) der Einrichtung geeignet sind zur synchronen Generierung eines Codes und wobei dem einrichtungsseitigen ersten Generator (6) Vergleichsmittel (7) zugeordnet sind zum Vergleichen des einrichtungsseitig generierten und des in der Fernbedienung (2) generierten und zu der Einrichtung übertragenen Codes für eine Überprüfung der Berechtigung der Fernbedienung (2) zur Anforderung der Freigabe der Funktionen, und wobei das Verfahren die folgenden Schritte umfaßt:
- Senden eines Synchronisierungsbefehls, insbesondere eines Headers, von der Einrichtung an den Transponder (4) der Fernbedienung (2) zum Signalisieren, daß neu synchronisiert werden soll,
- Senden einer in der Einrichtung generierten Zufallszahl von der Einrichtung an den Transponder (4) der Fernbedienung (2), und
- Speichern eines auf der Zufallszahl basierenden Wertes als aktuellen Innenzustand der beiden Generatoren (5,6) in Einrichtung und Fernbedienung (2).

7. Verfahren nach Anspruch 6,
**dadurch gekennzeichnet,**
**daß** die Zufallszahl vor der Verwendung für das Setzten der aktuellen Innenzustände der beiden Generatoren (5,6) in der Einrichtung und in der Fernbedienung (2) mit mindestens einer, in Einrichtung und Fernbedienung (2) gleichen Verschlüsselungsfunktion verschlüsselt wird.

8. Verfahren nach Anspruch 6 oder 7,
**dadurch gekennzeichnet,**
**daß** es nach jeder Freigabe der Funktionen der Einrichtung aufgrund einer Authentifizierung der Fernbedienung (2) durch den Transponder (4) nach nicht erfolgter Freigabe aufgrund des Vergleichs eines in der Einrichtung generierten Codes und eines in der Fernbedienung (2) generierten und zu der Einrichtung übertragenen Codes durchgeführt wird.

9. Verfahren nach Anspruch 6 oder 7,
**dadurch gekennzeichnet,**
**daß** es nach jeder Freigabe der Funktionen der Einrichtung aufgrund des Vergleichs eines in der Einrichtung generierten Codes und eines in der Fernbedienung (2) generierten und zu der Einrichtung übertragenen Codes durchgeführt wird.

10. Verfahren nach Anspruch 6 oder 7,
**dadurch gekennzeichnet,**
**daß** es nach jeder Freigabe der Funktionen der Einrichtung aufgrund des Vergleichs eines in der Einrichtung generierten Codes und eines in der Fernbedienung (2) generierten und zu der Einrichtung übertragenen Codes durchgeführt wird, sowie nach jeder Freigabe der Funktionen der Einrichtung aufgrund einer Authentifizierung der Fernbedienung (2) durch den Transponder (4) nach nicht erfolgter Freigabe aufgrund des Vergleichs eines in der Einrichtung generierten Codes und eines in der Fernbedienung (2) generierten und zu der Einrichtung übertragenen Codes.

11. Verfahren nach einem der Ansprüche 6 - 10, bei dem die Generatoren (5,6) von der Einrichtung und von der Fernbedienung (2) Rolling Codes erzeugen und bei dem von der Fernbedienung (2) für eine Freigabeanforderung zusammen mit dem generierten Rolling Code ein Festcode, für den in der Einrichtung und in der Fernbedienung (2) ein identischer Wert gespeichert ist, über Funkstrecke an die Einrichtung übertragen wird und bei dem die Freigabe der Funktionen durch Codevergleich bzw. durch Authentifizierung über den Transponder die folgenden Schritte umfaßt:
a) Überprüfen in der Einrichtung, ob ein Signal über Funkstrecke empfangen wurde;
b) falls ja in Schritt a), Überprüfen in der Einrichtung, ob ein empfangener Festcode mit einem gespeicherten Festcode übereinstimmt;
c) falls ja in Schritt b), Überprüfen in der Einrichtung, ob ein empfangener Rolling Code mit einem in der Einrichtung generierten Rolling Code übereinstimmt;
d) falls ja in Schritt c), Freigabe der Einrichtungsfunktionen;
e) falls nein in Schritt c), Überprüfen in der Einrichtung, ob eine daraufhin veranlaßte Authentifizierungsaufforderung an den Transponder (4) der Fernbedienung (2) einen gültigen Transponder (4) ergibt;
f) falls ja in Schritt e), Freigabe der Einrichtungsfunktionen.

12. Verfahren nach einem der Ansprüch 6 - 11,
**dadurch gekennzeichnet,**
**daß** die Authentifizierung der Fernbedienung (2) über den Transponder (4) die folgenden Schritte aufweist:
- Senden einer Zufallszahl unverschlüsselt und mit einer ersten Funktion verschlüsselt von der Einrichtung an die Fernbedienung (2),
- Empfangen der unverschlüsselten und der verschlüsselten Zufallszahl durch den Transponder (4) der Fernbedienung (2),
- Verschlüsseln der unverschlüsselt empfangenen Zufallszahl mit einer ersten Funktion in dem Transponder (4),
- Überprüfen durch Transponder (4), ob die verschlüsselt empfangene Zufallszahl mit der unverschlüsselt empfangenen verschlüsselten Zufallszahl übereinstimmt,
- falls ja, Verschlüsseln der Zufallszahl mit einer zweiten Funktion und Zurücksenden an die Einrichtung und
- Überprüfen in der Einrichtung, ob die empfangene verschlüsselte Zufallszahl mit der in der Einrichtung mit der zweiten Funktion verschlüsselten Zufallszahl übereinstimmt.

13. Verfahren nach einem der Ansprüche 6-12,
**dadurch gekennzeichnet,**
**daß** für eine angeforderte Freigabe der Einrichtungsfunktionen der von einer Fernbedienung (2) generierte und gesendete Code in der Einrichtung verglichen wird mit einem Empfangsfenster, das eine vorgegebene Anzahl von in der Einrichtung generierten, aufeinanderfolgenden Codes umfaßt.

## Claims

1. Enabling system for checking whether a request for enabling functions of a device is authorised, wherein the functions may consist, for example, of deactivating an alarm system or an immobiliser and activating a central locking of a vehicle, with a first generator (6) arranged on the device side for generating a first code, changing step by step starting from a current internal state of the first generator (6), and with a remote control (2), comprising a second generator (5) for generating a second code, changing step by step starting from a current internal state of the second generator (5), means (3) for transmitting the generated second code to the device via a radio link and also a transponder (4) which is suitable for authenticating the remote control (2) in respect of the device, wherein the generator (5) of the remote control (2) and the generator (6) of the device are suitable for synchronous generation of a code and wherein comparison means (7) are allocated to the first generator on the device side to compare the code generated on the device side and the code generated in the remote control (2) and transmitted to the device for checking the authorisation of the remote control (2) for requesting enabling of the functions, **characterised in that** means (9) for supplying a synchronisation signal and output means (9) for transmitting the synchronisation signal to the transponder (4) of the remote control (2) are provided on the device side, wherein the internal states of the code generators (5, 6) can be synchronised with one another by means of the synchronisation signal.

2. Enabling system according to claim 1, **characterised in that**
- encryption means are arranged on the device side for generating a value for the internal state of the code generator (6) of the device from at least part of the supplied synchronisation signal and also control means for setting the internal state corresponding to the generated value and
- the remote control (2) has further encryption means for generating a value for the internal state of the code generator (5) of the remote control (2) based on at least part of the synchronisation signal receivable from the transponder (4) and control means for setting the internal state corresponding to the value generated by the further encryption means.

3. Enabling system according to one of the preceding claims, **characterised in that** the synchronisation signals supplied by the device are composed of a synchronisation command for requesting the remote control (2) to re-synchronise and a random number as the basic value for setting the internal state of the code generator (5, 6) of the device and the remote control (2).

4. Enabling system according to one of the preceding claims, **characterised in that** the device and the remote control (2) have in each case means for storing a fixed code, which on each enabling request is transmitted from the remote control to the device together with the current code, which changes step by step, and the device has comparison means (7) for checking the identity of a fixed code received via radio link with the fixed code stored for this remote control (2).

5. Enabling system according to one of the preceding claims, **characterised in that** the code generators (5, 6) of the remote control (2) and the device are generators for generating a rolling code based on an identical "secret key" stored in the remote control (2) and in the device.

6. Method for an enabling system for checking whether a request for enabling functions of a device is authorised, wherein the functions may consist, for example, of deactivating an alarm system or an immobiliser and activating a central locking of a vehicle, with a first generator (6) arranged on the device side for generating a first code, changing step by step starting from a current internal state of the first generator (6), and with a remote control (2) comprising a second generator (5) for generating a second code, changing step by step starting from a current internal state of the second generator (5), means (3) for transmitting the generated second code to the device via a radio link and a transponder (4) which is suitable for authenticating the remote control (2) in respect of the device, wherein the generator (5) of the remote control (2) and the generator (6) of the device are suitable for synchronous generation of a code and wherein comparison means (7) are allocated to the first generator (6) on the device side to compare the code generated on the device side and the code generated in the remote control (2) and transmitted to the device for checking authorisation of the remote control (2) for requesting enabling of the functions and wherein the method comprises the following steps:
- sending a synchronisation command, in particular a header, from the device to the transponder (4) of the remote control (2) to signal that there should be re-synchronisation,
- sending a random number generated in the device from the device to the transponder (4) of the remote control (2) and
- storing a value based on the random number as current internal state of the two generators (5, 6) in the device and the remote control (2).

7. Method according to claim 6, **characterised in that** the random number is encrypted with at least one encryption function identical in the device and the remote control (2) before using for setting the current internal states of the two generators (5, 6) in the device and in the remote control (2).

8. Method according to claim 6 or 7, **characterised in that** it is carried out after each enabling of the functions of the device based on authentication of the remote control (2) by the transponder (4) after enabling has not taken place based on comparison of a code generated in the device and a code generated in the remote control (2) and transmitted to the device.

9. Method according to claim 6 or 7, **characterised in that** it is carried out after each enabling of the functions of the device based on comparison of a code generated in the device and a code generated in the remote control (2) and transmitted to the device.

10. Method according to claim 6 or 7, **characterised in that** it is carried out after each enabling of the functions of the device based on comparison of a code generated in the device and a code generated in the remote control (2) and transmitted to the device and after each enabling of the functions of the device based on authentication of the remote device (2) by the transponder (4) after enabling has not taken place based on comparison of a code generated in the device and a code generated in the remote control (2) and transmitted to the device.

11. Method according to one of claims 6 to 10, in which the generators (5, 6) of the device and the remote control (2) generate rolling codes and in which together with the generated rolling code a fixed code for which an identical value is stored in the device and in the remote control (2) is transmitted by the remote control (2) to the device via radio link for an enabling request and in which enabling the functions by code comparison or by authentication via the transponder comprises the following steps:
a) checking in the device whether a signal has been received via radio link;
b) if yes in step a) checking in the device whether a received fixed code agrees with a stored fixed code;
c) if yes in step b) checking in the device whether a received rolling code agrees with a rolling code generated in the device;
d) if yes in step c) enabling the device functions;
e) if no in step c) checking in the device whether an authentication request to the transponder (4) of the remote control (2) thereupon occasioned results in a valid transponder (4);
f) if yes in step e) enabling the device functions.

12. Method according to one of claims 6 to 11, **characterised in that** authentication of the remote control (2) via the transponder (4) comprises the following steps:
- sending a random number unencrypted and encrypted with a first function from the device to the remote control (2),
- receiving the unencrypted and the encrypted random number by the transponder (4) of the remote control (2),
- encrypting the random number received unencrypted with a first function in the transponder (4),
- checking by the transponder (4) whether the random number received encrypted agrees with the random number received unencrypted,
- if yes, encrypting of the random number with a second function and sending back to the device and
- checking in the device whether the received encrypted random number agrees with the random number encrypted in the device with the second function.

13. Method according to one of claims 6 to 12, **characterised in that** for requested enabling of the device functions the code generated by a remote control (2) and transmitted is compared in the device with a reception window comprising a default number of successive codes generated in the device.

## Revendications

1. Système de libération pour vérifier si une demande de libération de fonctions d'un dispositif est autorisée, pendant lequel les fonctions pouvant être constituées par exemple par la désactivation d'une installation d'alarme ou d'un dispositif de blocage empêchant le démarrage et par l'activation d'une unité de verrouillage centrale d'un véhicule, comportant un premier générateur (6) disposé dans le dispositif et servant à produire un premier code, qui varie pas-à-pas, à partir d'un état intérieur actuel du premier générateur (6) ainsi qu'une unité de télécommande (2), qui comporte un second générateur (5) servant à produire un second code, qui varie pas-à-pas, à partir d'un état intérieur actuel du second générateur (5), des moyens (3) pour transmettre le second code produit par l'intermédiaire d'une section radio, au dispositif ainsi qu'à un transpondeur (4), qui convient pour authentifier l'unité de télécommande (2) vis-à-vis du dispositif, et dans lequel le générateur (5) de l'unité de télécommande (2) et le générateur (6) du dispositif sont appropriés pour réaliser la production synchrone d'un code, et dans lequel au premier générateur (6) situé dans le dispositif sont associés des moyens comparateurs (7) servant à comparer le code, qui est généré dans le dispositif, et le code, qui est généré dans l'unité de télécommande (2) et est transmis au dispositif, pour une vérification de l'autorisation de l'unité de télécommande (2) à demander la libération des fonctions,
**caractérisé en ce que** dans le dispositif sont prévus des moyens (9) pour fournir un signal de synchronisation ainsi que des moyens de sortie (9) pour transmettre le signal de synchronisation au transpondeur (4) de l'unité de télécommande (2), les états intérieurs des générateurs de code (5, 6) pouvant être synchronisés entre eux à l'aide du signal de synchronisation.

2. Système de libération selon la revendication 1, **caractérisé en ce**
- **que** les moyens de codage sont disposés côté dispositif pour générer une valeur pour l'état intérieur du générateur de code (6) du dispositif, constitué par au moins une partie du signal de synchronisation préparé ainsi que par des moyens de commande pour positionner l'état intérieur conformément à la valeur générée, et
- **que** l'unité de télécommande (2) comporte d'autres moyens de codage pour la production d'une valeur pour l'état intérieur du générateur de code (5) de l'unité de télécommande (2) sur la base d'au moins une partie du signal de synchronisation pouvant être reçue par le transpondeur (4), et des moyens de commande pour positionner l'état intérieur conformément à la valeur produite par les autres moyens de codage.

3. Système de libération selon l'une des revendications précédentes, **caractérisé en ce que** les signaux de synchronisation préparés par le dispositif se composent d'une instruction de synchronisation servant à demander à l'unité de télécommande (2) d'effectuer une nouvelle synchronisation, et d'un nombre aléatoire en tant que valeur devant être prise comme base pour le positionnement de l'état intérieur du générateur de code (5, 6) du dispositif ainsi que de l'unité de télécommande (2).

4. Système de libération selon l'une des revendications précédentes, **caractérisé en ce que** le dispositif et l'unité de télécommande (2) comportent respectivement des moyens pour mémoriser un code fixe, qui est transmis lors de chaque demande de libération, conjointement avec le code actuel, qui varie pas-à-pas, par l'unité de télécommande au dispositif, et que le dispositif comporte des moyens comparateurs (7) pour contrôler l'identité d'un code fixe transmis au moyen de la section radio, au code fixe mémorisé pour cette unité de télécommande (2).

5. Système de libération selon l'une des revendications précédentes, **caractérisé en ce que** les générateurs de code (5, 6) de l'unité de télécommande (2) et du dispositif sont des générateurs servant à produire un code roulant sur la base d'un code "secret key" identique, mémorisé dans l'unité de télécommande (2) et dans le dispositif.

6. Procédé pour un système de libération pour vérifier si une demande de libération de fonctions d'un dispositif est autorisée, dans lequel les fonctions peuvent être constituées par exemple par la désactivation d'une installation d'alarme ou d'un dispositif de blocage empêchant le démarrage et par l'activation d'une unité de verrouillage centrale d'un véhicule, comportant un premier générateur (6) disposé dans le dispositif et servant à produire un premier code, qui varie pas-à-pas, à partir d'un état intérieur réel du premier générateur (6) ainsi qu'une unité de télécommande (2), qui comporte un second générateur (5) servant à produire un second code, qui varie pas-à-pas, à partir d'un état intérieur actuel du second générateur (5), des moyens (3) pour transmettre le second code produit par l'intermédiaire d'une section radio, au dispositif ainsi qu'à un transpondeur (4), qui convient pour authentifier l'unité de télécommande (2) par rapport au dispositif, et dans lequel le générateur (5) de l'unité de télécommande (2) et du générateur (6) du dispositif sont appropriés pour réaliser la production synchrone d'un code, et dans lequel au premier générateur (6) situé dans le dispositif sont associés des moyens comparateurs (7) servant à comparer le code, qui est généré dans le dispositif et du code, qui est généré dans l'unité de télécommande (2) et est transmis au dispositif, pour une vérification de l'autorisation de l'unité de télécommande (2) à demander la libération des fonctions, et selon lequel le procédé comprend les pas suivants:
- envoi d'une instruction de synchronisation, notamment un en-tête, du dispositif au transpondeur (4) de l'unité de télécommande (2) pour signaler qu'une nouvelle synchronisation doit être exécutée,
- envoi d'un nombre aléatoire généré dans le dispositif, par ce dispositif au transpondeur (4) de l'unité de télécommande (2), et
- mémorisation d'une valeur basée sur le nombre aléatoire en tant qu'état intérieur actuel des deux générateurs (5, 6) dans le dispositif et dans l'unité de télécommande (2).

7. Procédé selon la revendication 6, **caractérisé en ce que** le nombre aléatoire est chiffré avant l'utilisation, pour le réglage des états intérieurs actuels des deux générateurs (5, 6) dans le dispositif et dans l'unité de télécommande (2) avec au moins une fonction de chiffrement identique dans le dispositif et dans l'unité de télécommande (2).

8. Procédé selon la revendication 6 ou 7, **caractérisé en ce qu'**il est mis en oeuvre après la libération des fonctions du dispositif en raison d'une authentification de l'unité de télécommande (2) par le transpondeur (4) après une libération non réussie, en raison de la comparaison d'un code produit dans le dispositif et d'un code produit dans l'unité de télécommande (2) et transmis au dispositif.

9. Procédé selon la revendication 6 ou 7, **caractérisé en ce qu'**il est mis en oeuvre après chaque libération des fonctions du dispositif en raison de la comparaison d'un code produit dans le dispositif et d'un code produit dans l'unité de télécommande (2) et transmis dans le dispositif.

10. Procédé selon la revendication 6 ou 7, **caractérisé en ce qu'**il est mis en oeuvre après chaque libération des fonctions du dispositif sur la base de la comparaison d'un code produit dans le dispositif et d'un code produit dans l'unité de télécommande (2) et transmis au dispositif, ainsi qu'après chaque libération des fonctions du dispositif en raison d'une authentification de l'unité de télécommande (2) par le transpondeur (4) après une libération non réussie, en raison de la comparaison d'un code produit dans le dispositif et d'un code produit dans le dispositif de télécommande (2) et transmis au dispositif.

11. Procédé selon l'une des revendications 6 à 10, selon lequel les générateurs (5, 6) du dispositif et de l'unité de télécommande (2) produisent des codes roulants, et selon lequel un code fixe, pour lequel une valeur identique est mémorisée dans le dispositif et dans l'unité de télécommande (2), est transmis par l'intermédiaire d'une liaison radio au dispositif à partir de l'unité de télécommande (2) pour une demande de libération conjointement avec le code roulant produit, et selon lequel la libération des fonctions par la comparaison de code ou par l'authentification au moyen du transpondeur comprend les étapes suivantes:
a) vérification dans le dispositif si un signal a été reçu par l'intermédiaire de la liaison radio;
b) dans le cas où la réponse est oui lors de l'étape a) vérification dans le dispositif pour savoir si un code fixe reçu coïncide avec un code fixe mémorisé;
c) dans le cas où la réponse est oui lors de l'étape b), vérification dans le dispositif pour savoir si un code roulant reçu concorde avec un code roulant produit dans le dispositif;
d) dans le cas où la réponse est oui lors de l'étape c), libération des fonctions du dispositif;
e) dans le cas où la réponse est non lors de l'étape c), vérification dans le dispositif pour savoir si une demande d'authentification déclenchée alors dans le transpondeur (4) de l'unité de télécommande (2) fournit un transpondeur valable (4);
f) dans le cas où la réponse est oui lors de l'étape e), libération des fonctions du dispositif.

12. Procédé selon l'une des revendications 6 à 11, **caractérisé en ce que** l'authentification de l'unité de télécommande (2) par l'intermédiaire du transpondeur (4) comporte les étapes suivantes:
- émission d'un nombre aléatoire non chiffré et chiffré avec une première fonction par le dispositif à l'unité de télécommande (2),
- réception du nombre aléatoire non chiffré et du nombre aléatoire chiffré par le transpondeur (4) de l'unité de télécommande (2),
- chiffrement du nombre aléatoire non chiffré reçu avec une première fonction dans le transpondeur (4),
- vérification par le transpondeur (4) si le nombre aléatoire reçu chiffré concorde avec le nombre aléatoire chiffré non chiffré reçu, chiffré,
- dans le cas où la réponse est oui, chiffrement du nombre aléatoire avec une seconde fonction et renvoi au dispositif, et
- vérification dans le dispositif si le nombre aléatoire chiffré reçu coïncide avec le nombre aléatoire chiffré dans le dispositif avec la seconde fonction.

13. Procédé selon l'une des revendications 6 à 12, **caractérisé en ce que** pour une libération demandée des fonctions du dispositif, le code produit et émis par une unité de télécommande (2), est comparé dans le dispositif à une fenêtre de réception qui comprend un nombre prédéterminé de codes successifs produits dans le dispositif.
